# EUROPEAN PATENT SPECIFICATION

(11) **EP 2 124 466 B1**
(45) Date of publication and mention of the grant of the patent: **22.07.2015**
(21) Application number: 07845767.8
(22) Date of filing: 30.11.2007
(51) Int. Cl.: H04W 72/12

(54) **METHOD AND SYSTEMS FOR CONFIGURING SHARED CONTROLLED CHANNEL OF HIGH SPEED DOWNLINK SHARED CHANNEL**
VERFAHREN UND SYTEME FÜR KONFIGURIEREN VON GEMEINSAMEN GESTEUERTEN KANAL EINES SCHNELLEN ABWÄRTSSTRECKEN-GEMEINSAMEN-KANALS
PROCÉDÉ ET SYSTÈMES DE CONFIGURATION D'UN CANAL À CONTRÔLE PARTAGÉ D'UN CANAL PARTAGÉ DE LIAISON DESCENDANTE GRANDE VITESSE

(30) Priority: 12.01.2007 CN 200710000879
(43) Date of publication of application: 25.11.2009
(73) Proprietor: ZTE Corporation, Shenzhen, Guangdong 518057 (CN)
(72) Inventor: KE, Yazhu, Guangdong 518057 (CN)
(74) Representative: Hatzmann, Martin
(86) International application number: PCT/CN2007/003404
(87) International publication number: WO 2008/083547

(56) References cited:
- EP-A1- 1 351 538
- EP-A1- 1 355 430
- CN-A- 1 764 307
- CN-A- 1 791 268
- US-A1- 2003 123 470
- US-A1- 2003 147 371
- US-A1- 2006 127 091
- "3rd Generation Partnership Project; Technical Specification Group Radio Access Network; High Speed Downlink Packet Access (HSDPA); Overall description; Stage 2 (Release 6)", 3GPP STANDARD; 3GPP TS 25.308, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V6.3.0, 1 December 2004 (2004-12-01), pages 1-28, XP050367593,

## Description

### Filed of the Invention

The present invention relates to communication field, in particular to a method and a system for configuring Shared Control Channel of High Speed Downlink Shared Channel (HS-SCCH for short).

### Background of the Invention

To improve user data flow and system throughput, High Speed Downlink Shared Channel (HS-DSCH for short) is introduced into R5 standard protocol of 3GPP (3rd Generation Partnership Project), time division and code division is adopted for the physical channel mapped by HS-DSCH , and Hybrid Automatic Repeat Request(HARQ for short) and Adaptive Modulation and Coding(AMC for short) is adopted for HS-DSCH, so that peak rate can amount to 10.8Mbps-30Mbps. The final object is to increase system capacity and reduce transmission delay via providing High Speed Packet Service access, thereby meet user's Quality of Service (QoS for short) demand.

Current 3GPP protocol standard enhances the forward access state (CELL_FACH)in Radio Resource Control(RRC for short) connecting mode and/or the paging state(CELL_PCH/URA_PCH) in RRC connecting mode, that is, High Speed Shared Channel can also be used in the CELL_FACH and/or CELL_PCH/URA_PCH state, herein, using High Speed Downlink Packet Access(HSDPA for short) in CELL_FACH and/or CELL_PCH/URA_PCH state is referred to as the common state of an enhanced connecting mode. However, the principle of High Speed Shared Channel technology lies in that: User Equipment(UE for short) monitors the Shared Control Channel of HS-DSCH(HS-SCCH for short) via the RNTI of HS-DSCH(H-RNTI for short), acquires the signaling parameters of High Speed Physical Downlink Shared Channel (HS-PDSCH for short), and then it is able to receive the data of HS-PDSCH.

When the UE is in the common state of the enhanced connecting mode, as there is no any dedicated process, the UE needs to know in advance the HS-SCCH available in the common state of the enhanced connecting mode, so as to use correct Channelisation codes to de-spread the signaling information carried on HS-SCCH, so that the data of HS-PDSCH can be correctly received by the UE.

Thus, a method or a system for configuring HS-SCCH for use by the UE in the common state is needed.

It is noted that EP1355430A1 relates to error detection methods of evaluating information that is transmitted in control channels of systems. It is further noted that US2003/123470 discloses an apparatus and method for transmitting/receiving control information on a shared control channel. It is also noted that US2003/147371A1 discloses an apparatus and method for transmitting and receiving serving high speed shared control channel (HS-SCCH) set information in a mobile communication system supporting a high speed downlink packet access (HSDPA) scheme.

### Summary of the Invention

In view of the above problem, the present invention aims to provide a technical solution for configuring HS-SCCH for use by UE in a common state, so that UE can use correct Channelisation codes and scrambling codes to de-spread and de-scramble the signaling information carried on HS-SCCH.

According to one aspect of the present invention, a method for configuring HS-SCCH for use by UE in the common state of an enhanced connecting mode is provided, which comprises the following steps:
Step 102, a Radio Network Controller, RNC, informing the UE via signaling of a configured Channelisation code and/or scrambling code of HS-SCCH that can be used by the UE in the common state of the enhanced connecting mode; Step 104, the UE acquiring the configured Channelisation code and/or scrambling code from the signaling; and Step 106, the UE, when monitoring the HS-SCCH in the common state of the enhanced connected mode, using the configured Channelisation code and/or scrambling code to perform de-spread and de-scramble on the HS-SCCH.

Preferably, wherein, the signaling comprises at least one of: system broadcast message and common carrier message of a multimedia broadcast multicast service. The system broadcast message comprises at least one of: system broadcast message 5 and system broadcast message 6. There are multiple Channelisation codes. The value range of the Channelisation code is 0-127 or 0-255. The Channelisation code is associated with any one of: transmission channel, media access control flow, priority queue, and Channelisation codes or Channelisation code set available in the common state of the enhanced connecting mode.

Preferably, scrambling code is configured as the one of a primary common pilot channel, and here the radio network controller only informs the UE via signaling of the Channelisation codes. The scrambling codes can also be primary scrambling code and secondary scrambling code, and here the radio network controller informs the UE of the Channelisation code and the scrambling code via signaling. The value range of the scrambling codes is 0-15.

According to another aspect of the present invention, a system for configuring a HS-SCCH for use by an UE in the common state of an enhanced connecting mode is provided, which comprises:
an informing unit at a Radio Network Controller, RNC, for informing the UE via signaling of a configured Channelisation code and/or scrambling code of HS-SCCH that can be used by the UE in the common state of the enhanced connecting mode; an acquiring unit at the UE for acquiring the configured Channelisation code and/or scrambling code from the signaling; and a processing unit at the UE for using the configured Channelisation code and/or scrambling code to perform de-spread and de-scramble on the HS-SCCH, when the UE monitors the data sending the common state of the enhanced connecting mode.

According to this invention, the UE can use correct Channelisation codes and scrambling codes to de-spread and de-scramble the signaling information carried on HS-SCCH, and thereby the UE in the common state of the enhanced connecting mode can correctly receive the data on HS-PDSCH, thus ensuring user's QoS.

### Brief Description of the Accompanying Drawings

The drawings herein are used to provide further understanding of this invention and constitute a part of this application. Exemplary embodiments of this invention and the description thereof are used to describe this invention and shall not be construed as improper limitations on the same. In the accompanying drawings:
Figure 1 is a flowchart of the method for configuring HS-SCCH used by UE in a common state according to the embodiments of the invention;
Figure 2 is a flowchart of the method for the UE to acquire code resource information of HS-SCCH according to the embodiments of the invention;
Figure 3 is a schematic flowchart illustrating the procedure that UE acquires code resource information of HS-SCCH according to the embodiments of the invention;
Figure 4 is a block diagram of the system for configuring HS-SCCH used by the UE in a common state according to the embodiments of the invention;
Figure 5 is a block diagram of an RNC for configuring HS-SCCH for use in the common state according to the embodiments of the invention; and
Figure 6 is a block diagram of an UE for configuring HS-SCCH for use in the common state according to the embodiments of the invention.

### Detailed Description of the Preferred Embodiments

The present invention will be detailed hereinafter in connection with the embodiments of the present invention and reference will be made to the drawings, if not conflict, the embodiments and the technical features of the embodiments can be combined with each other.

The embodiments of the present invention will be described hereinafter in detail in conjunction with the drawings thereof. Wherein, the embodiments and the technical features thereof can be combined if not conflict.

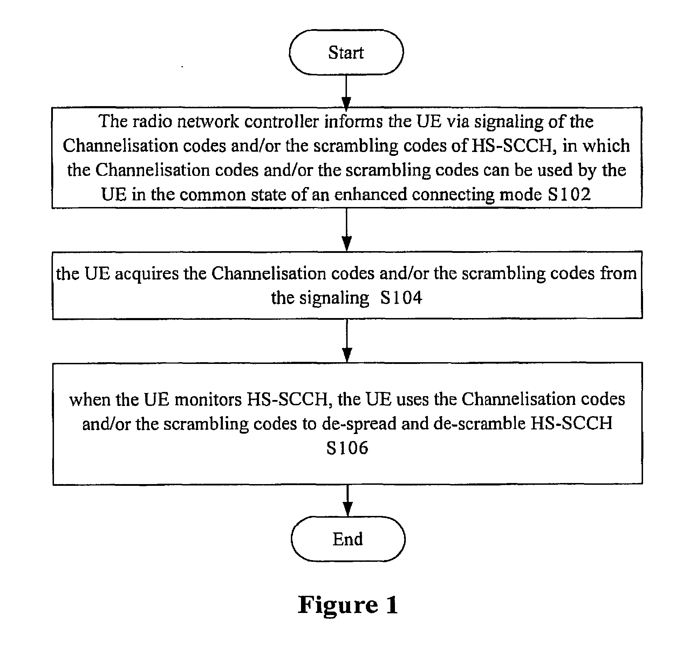

Figure 1 illustrates the method for configuring HS-SCCH used by the UE in a common state according to the embodiments of the present invention. As shown in figure 1, the method comprises the following steps:
Step 102, Radio Network Controller (RNC for short) informs UE via signaling of the Channelisation code and/or the scrambling code of the HS-SCCH that can be used by the UE in a common state;
Step 104, the UE acquires the Channelisation code and/or the scrambling code from the signaling; and
Step 106, when monitoring HS-SCCH, the UE uses the Channelisation code and/or the scrambling code to perform de-spread and de-scramble on HS-SCCH.

Wherein, the signaling described above comprises either one of: system broadcast message and the common carrier message of multimedia broadcast multicast service. The system broadcast message comprises one of: system broadcast message 5 and system broadcast message 6. There can be multiple Channelisation codes, and preferably, the value range of the Channelisation code can be 0-127 or 0-255. Preferably, the Channelisation code can be associated with any one of: transmission channel, MAC-d flow, or priority queue. Preferably, the scrambling code can be the one of primary pilot channel. Preferably, the scrambling code can be primary scrambling code and secondary scrambling code. The value range of the scrambling codes is preferably 0-15.

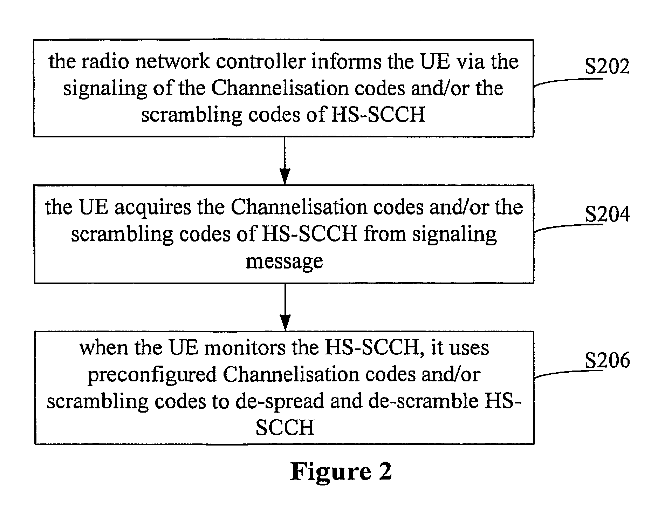

As shown in figure 2, the basic idea of the method for configuring HS-SCCH used by the UE in a common state can comprise the following steps:
Step 202, RNC informs the UE via signaling of the Channelisation code number (i.e. the Channelisation code) and/or the scrambling code number (i.e. the scrambling code) of HS-SCCH that can be used by the UE in the common state;
Step 204, the UE acquires the Channelisation code number and/or the scrambling code number of HS-SCCH that can be used in the common state from the signaling;
Step 206, when monitoring the HS-SCCH, UE uses the preconfigured Channelisation code number and/or scrambling code number of HS-SCCH to perform de-spread and de-scramble on the HS-SCCH.

Wherein, there can be multiple Channelisation code numbers of HS-SCCH for use in a common state, i.e. a set. Preferably, the value range of the Channelisation code number of HS-SCCH for use in the common state can be 0-127 or 0-255. The Channelisation code number of HS-SCCH for use in the common state can be associated with the transmission channel, the MAC-d flow, or the priority queue, or only a large set available in the common state.

In one embodiment, the scrambling code number of HS-SCCH for use in the common state can be configured as the scrambling code of the primary pilot channel, i.e. primary scrambling code, and the RNC does not need to inform the UE of the scrambling code via the signaling message in this case.

In another embodiment, the scrambling code number of HS-SCCH for use in the common state can be the primary scrambling code and the secondary scrambling code, and the RNC needs to inform the UE of the scrambling code via the signaling message in this case. And preferably, if the scrambling code number of HS-SCCH for use in the common state is the primary scrambling code and the secondary scrambling code, their value range is 0-15.

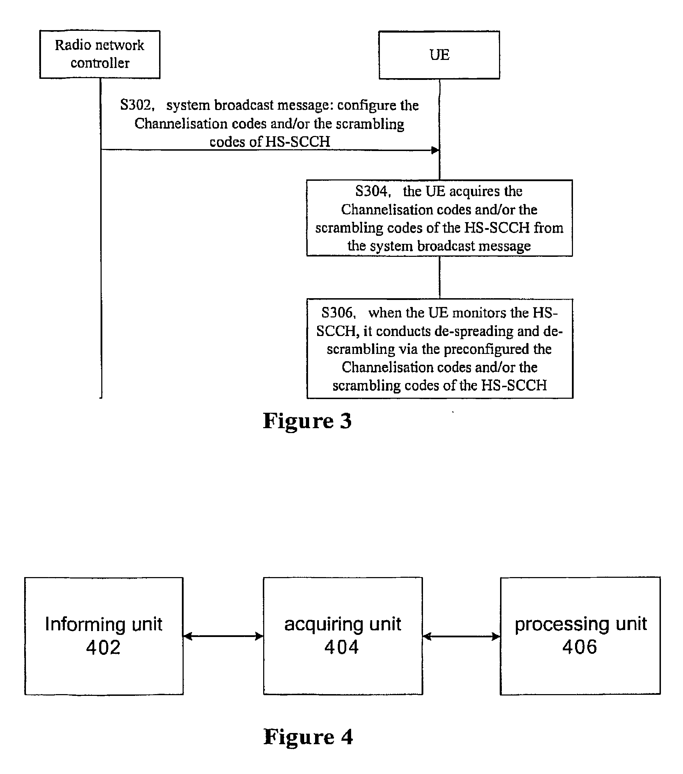

Specifically, referring to figure 3, it illustrates the interaction between the RNC and UE in the process of configuring HS-SCCH for use in the common state. As shown in figure 3, the following three steps are comprised:
Step 302, the RNC informs the UE via the system broadcast message of the Channelisation code and/or scrambling code of HS-SCCH that can be used in the common state of an enhanced connecting mode;
Step 304, the UE acquires the Channelisation code and/or scrambling code of HS-SCCH from the system broadcast message;
Step 306, when monitoring HS-SCCH, the UE uses the preconfigured Channelisation code and/or scrambling code, i.e. the one acquired in Step 304, of HS-SCCH to perform de-spread and de-scramble on HS-SCCH.

According to another embodiment of the present invention, a computer program and a computer program product thereof are provided. Wherein the computer program product comprises instructions for causing a processor to perform the steps illustrated in any one of figure 1-3 above.

According to another embodiment of the present invention, provides a system for realizing the method for configuring HS-SCCH for use in the common state. Now referring to figure 4, preferably, the system comprises an informing unit 402, an acquiring unit 404 and a processing unit 406, and the details of the components will be described below.

The informing unit 402, used to inform the UE via signaling of the Channelisation code and/or the scrambling code of HS-SCCH that can be used by the UE in a common state. The acquiring unit 404, used to acquire the Channelisation code and/or the scrambling code from the signaling. The processing unit 406, used to use the Channelisation code and/or the scrambling code to perform de-spread and de-scramble on the HS-SCCH when the UE monitors the data sent in the common state.

According to another embodiment of the present invention, provides an RNC for configuring HS-SCCH for use in the common state.

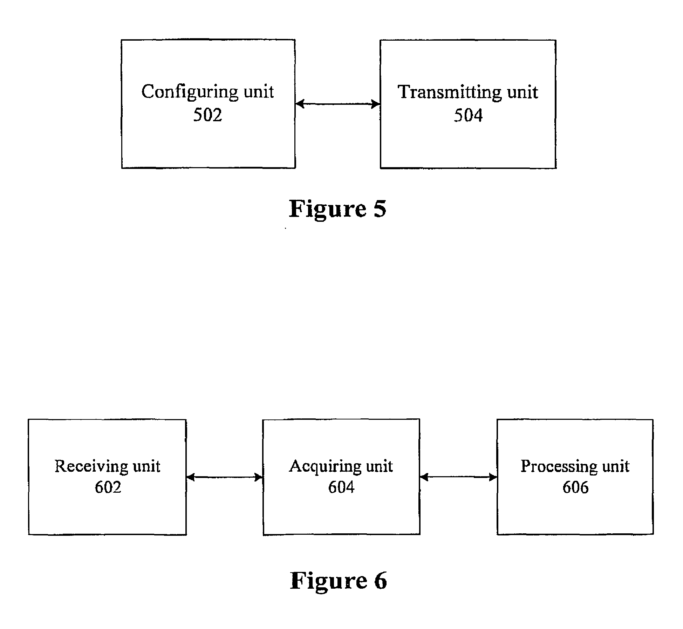

Now referring to figure 5, preferably, the RNC comprises a configuring unit 502, a transmitting unit 504, the details of the components will be described below.

The configuring unit 502, used to configure Channelisation code and/or the scrambling code of HS-SCCH that can be used by the UE in a common state. The transmitting unit 504, used to transmitting signaling to the UE, wherein the Channelisation code and/or the scrambling code configured by the configuring unit 502 is contained in the signaling.

According to another embodiment of the present invention, provides an UE for configuring HS-SCCH for use in the common state.

Now referring to figure 6, preferably, the UE comprises a receiving unit 602, an acquiring unit 604 and a processing unit 606, and the details of the components will be described below.

The receiving unit 602, used to receive a signaling from the RNC, wherein the Channelisation code and/or the scrambling code of HS-SCCH that can be used by the UE in a common state is contained in the signaling. The acquiring unit 604, used to acquire the Channelisation code and/or the scrambling code from the signaling. The processing unit 606, used to use the Channelisation code and/or the scrambling code to perform de-spread and de-scramble on the HS-SCCH when the UE monitors the data sent in the common state.

For example, the receiving unit 602 of the UE can be connected to the transmitting unit 504 of the RNC wirelessly.

With the technical solutions described in at least one embodiment of the embodiments described above, the UE can use correct Channelisation code and/or scrambling code to perform de-spread and de-scramble on the signaling information carried on HS-SCCH, and thereby the UE in the common state of the enhanced connecting mode can correctly receive the data on HS-PDSCH, thus the QoS can be ensured.

The descriptions above are only preferable embodiments of the present invention, which are not used to restrict the present invention. For those skilled in the art, the present invention may have various changes and variations. Any amendments, equivalent substitutions, improvements etc. within the principle of the present invention are all concluded in the scope of protection of the appended claims.

Obviously, one skilled in the art shall understand that various modules and steps above can be realized with general computing devices and can be integrated into one single computing device or distributed within a network consisting of multiple computing devices, and alternatively, the various modules and steps above can be realized with the program codes executable by the computing devices, and thus these program codes can be stored in memory devices so as to be executed by the computing devices, or the various modules and steps above can be formed into individual integrated circuit modules, or a plurality of the modules or steps can be formed into a single integrated circuit module so as to be realized. Therefore, the present invention is not limited to any particular hardware or software combination. It should be understood that alterations of the embodiments are apparent to one skilled in the art and do not depart from the scope of the appended claims.

## Claims

1. A configuring method for configuring a HS-SCCH for use by a User Equipment, UE, in a common state of an enhanced connecting mode, **characterized in that** the method comprises the following steps:
A Radio Network Controller, RNC, informing the UE via signaling of a configured Channelisation code and/or scrambling code of HS-SCCH that can be used by the UE in the common state of the enhanced connecting mode;
the UE acquiring the configured Channelisation code and/or scrambling code from the signaling; and
the UE, when monitoring the HS-SCCH in the common state of the enhanced connecting mode, using the configured Channelisation code and/or scrambling code to perform de-spread and de-scramble on the HS-SCCH (S106).

2. The configuring method according to claim 1, wherein the scrambling code is the one of a primary pilot channel.

3. The configuring method according to claim 1, wherein the scrambling code includes primary scrambling code and secondary scrambling code.

4. The configuring method according to claim 2, wherein the step of the RNC informing the UE via signaling of the configured Channelisation code and/or scrambling code HS-SCCH is specifically that:
the RNC informs the UE via signaling of the configured Channelisation code of HS-SCCH that can be used by the UE in the common state of the enhanced connecting mode.

5. The configuring method according to claim 3, wherein the step of the RNC informing the UE via signaling of the configured Channelisation code and/or scrambling code HS-SCCH is specifically that:
the RNC informs the UE via signaling of the configured Channelisation code and scrambling code of HS-SCCH that can be used by the UE in the common state of the enhanced connecting mode.

6. The configuring method according to any of claims 1-5, wherein the signaling comprises at least one of: system broadcast message and common carrier message of a multimedia broadcast multicast service.

7. The configuring method according to any of claims 6, wherein the system broadcast message comprises at least one of: system broadcast message 5 and system broadcast message 6.

8. The configuring method according to any of claims 1-5, wherein there are multiple Channelisation codes.

9. The configuring method according to any of claims 1-5, wherein the value range of the Channelisation code is 0-127.

10. The configuring method according to any of claims 1-5, wherein the value range of the Channelisation code is 0-255.

11. The configuring method according to any of claims 1-5, wherein the Channelisation code is associated with any one of: transmission channel, media access control flow, priority queue, and Channelisation code or Channelisation code set available in the common state of the enhanced connecting mode.

12. The configuring method according to any of claims 1-5, wherein the value range of the scrambling code is 0-15.

13. A configuring system for configuring a HS-SCCH for use by a User Equipment, UE, in a common state of an enhanced connecting mode, **characterized in that** the system comprises:
an informing unit (402) at a Radio Network Controller, RNC, for informing the UE via signaling of a configured Channelisation code and/or scrambling code of HS-SCCH that can be used by the UE in the common state of the enhanced connecting mode;
an acquiring unit (404) at the UE for acquiring the configured Channelisation code and/or scrambling code from the signaling; and
a processing unit (406) at the UE for using the configured Channelisation code and/or scrambling code to perform de-spread and de-scramble on the HS-SCCH when the UE is monitoring the data sent in the common state of the enhanced connecting mode.

## Patentansprüche

1. Konfigurationsverfahren zum Konfigurieren eines Hochgeschwindigkeits-Kontrollkanals (HS-SCCH, engl. High Speed Shared Control Channel) zur Verwendung durch ein Benutzerendgerät, UE (engl. User Equipment), in einem gemeinsamen Zustand eines verbesserten Verbindungsmodus, **dadurch gekennzeichnet, dass** das Verfahren die Schritte umfasst, in denen:
ein Radio-Netzwerk-Controller, RNC, das UE durch Signalisierung eines konfigurierten Kanalisierungscodes und/oder Verschlüsselungscodes informiert, welche HS-SCCH von dem UE in dem gemeinsamen Zustand des verbesserten Verbindungsmodus verwendet werden können;
die UE den konfigurierten Kanalisierungscode und/oder den Verschlüsselungscode von der Signalisierung beschafft;
das UE, bei der Überwachung des HS-SCCH im gemeinsamen Zustand des verbesserten Verbindungsmodus, den konfigurierten Kanalisierungscode und/oder den Verschlüsselungscode verwendet, um Entspreizung und Entschlüsselung an dem HS-SCCH (S106) durchzuführen.

2. Konfigurationsverfahren nach Anspruch 1, wobei der Verschlüsselungscode der eines primären Pilotkanals ist.

3. Konfigurationsverfahren nach Anspruch 1, wobei der Verschlüsselungscode einen primären Verschlüsselungscode und einen sekundären Verschlüsselungscode umfasst.

4. Konfigurationsverfahren nach Anspruch 2, wobei der Schritt, in dem der RNC das UE durch Signalisierung des konfigurierten Kanalisierungscodes und/oder des Verschlüsselungscodes des HS-SCCH spezifisch ist, dass:
der RNC das UE durch Signalisierung des konfigurierten Kanalisierungscodes und Verschlüsselungscodes informiert, welche HS-SCCH von dem UE in dem gemeinsamen Zustand des verbesserten Verbindungsmodus verwendet werden können.

5. Konfigurationsverfahren nach Anspruch 3, wobei der Schritt, in dem der RNC das UE durch Signalisierung des konfigurierten Kanalisierungscodes und/oder des Verschlüsselungscodes des HS-SCCH spezifisch ist, dass:
der RNC das UE durch Signalisierung des konfigurierten Kanalisierungscodes und des Verschlüsselungscodes informiert, welche HS-SCCH von dem UE in dem gemeinsamen Zustand des verbesserten Verbindungsmodus verwendet werden können.

6. Konfigurationsverfahren nach einem der Ansprüche 1-5, wobei das Signalisieren mindestens eine der Folgenden umfasst: Systemrundfunknachricht und gemeinsame Trägernachricht eines Multimedia Broadcast Multicast Service (MBMS).

7. Konfigurationsverfahren nach einem der Ansprüche 6, wobei die Systemrundfunknachricht mindestens eine der Folgenden umfasst: Systemrundfunknachricht 5 und Systemrundfunknachricht 6.

8. Konfigurationsverfahren nach einem der Ansprüche 1-5, wobei es mehrere Kanalisierungscodes gibt.

9. Konfigurationsverfahren nach einem der Ansprüche 1-5, wobei der Wertebereich des Kanalisierungscodes 0-127 ist.

10. Konfigurationsverfahren nach einem der Ansprüche 1-5, wobei der Wertebereich des Kanalisierungscodes 0-255 ist.

11. Konfigurationsverfahren nach einem der Ansprüche 1-5, wobei der Kanalisierungscode mit einem der Folgenden assozüert ist: Übertragungskanal, Medienzugangssteuerfluss, Prioritätswarteschlange und Kanalisierungscode oder Kanalisierungscodesatz, verfügbar in dem gemeinsamen Zustand des verbesserten Verbindungsmodus.

12. Konfigurationsverfahren nach einem der Ansprüche 1-5, wobei der Wertebereich des Verschlüsselungscodes 0-15 ist.

13. Konfigurationssystem zum Konfigurieren eines HS-SCCH zur Verwendung durch ein Benutzerendgerät, UE, in einem gemeinsamen Zustand eines verbesserten Verbindungsmodus, **dadurch gekennzeichnet, dass** das System Folgendes umfasst:
eine Informationseinheit (402) an einem Radio-Netzwert-Controller (RNC), um das UE durch Signalisierung eines konfigurierten Kanalisierungscodes und/oder Verschlüsselungscodes zu informieren, welche HS-SCCH von dem UE in dem gemeinsamen Zustand des verbesserten Verbindungsmodus verwendet werden können;
eine Beschaffungseinheit (404) an dem UE, um den konfigurierten Kanalisierungscode und/oder Verschlüsselungscode von der Signalisierung zu beschaffen;
eine Verarbeitungseinheit (406) an dem UE zur Verwendung des konfigurierten Kanalisierungscodes und/oder Verschlüsselungscodes, um Entspreizung und Entschlüsselung an dem HS-SCCH durchzuführen, wenn das UE die Daten, die in dem gemeinsamen Zustand des verbesserten Verbindungsmodus gesendet werden, überwacht.

## Revendications

1. Procédé de configuration pour configurer un HS-SCCH destiné à être utilisé par un Equipement Utilisateur, UE, dans un régime commun d'un mode de connexion renforcée, le procédé étant **caractérisé en ce qu'**il comporte les étapes suivantes :
communication à l'UE, par un contrôleur de réseau radio (RNC), de signaux indiquant un code de découpage en canaux et/ou un code de brouillage configuré(s) de HS-SCCH, utilisable(s) par l'UE dans le régime commun du mode de connexion renforcée ;
acquisition, par l'UE, du code de découpage en canaux et/ou du code de brouillage à partir des signaux ; et
utilisation par l'UE, pendant le contrôle du HS-SCCH dans le régime commun du mode de connexion renforcée, du code de découpage en canaux et/ou du code de brouillage configuré(s) afin d'effectuer un désétalement et un désembrouillage sur le HS-SCCH (S 106).

2. Procédé de configuration selon la revendication 1, dans lequel le code de brouillage est celui d'un canal pilote primaire.

3. Procédé de configuration selon la revendication 1, dans lequel le code de brouillage comprend un code de brouillage primaire et un code de brouillage secondaire.

4. Procédé de configuration selon la revendication 2, dans lequel l'étape de communication à l'UE, par le RNC, de signaux indiquant le code de découpage en canaux et/ou le code de brouillage configuré(s) de HS-SCCH consiste spécifiquement en ce que :
le RNC communique à l'UE, par des signaux, le code de découpage en canaux configuré du HS-SCCH utilisable par l'UE dans le régime commun du mode de connexion renforcée.

5. Procédé de configuration selon la configuration 3, dans lequel l'étape de communication à l'UE, par le RNC, de signaux indiquant le code de découpage en canaux et/ou le code de brouillage configuré(s) de HS-SCCH consiste spécifiquement en ce que :
le RNC communique à l'UE, par des signaux, le code de découpage en canaux et le code de brouillage configurés du HS-SCCH utilisable par l'UE dans le régime commun du mode de connexion renforcée.

6. Procédé de configuration selon l'une quelconque des revendications 1 à 5, dans lequel les signaux communiqués comprennent un message de diffusion de système et/ou un message d'entreprise de télécommunication d'un service de diffusion/multidiffusion multimédia.

7. Procédé de configuration selon l'une quelconque des revendication 6, dans lequel le message de diffusion de système comprend un message 5 de diffusion de système et/ou un message 6 de diffusion de système.

8. Procédé de configuration selon l'une quelconque des revendications 1 à 5, dans lequel il y a de multiples codes de découpage en canaux.

9. Procédé de configuration selon l'une quelconque des revendications 1 à 5, dans lequel l'intervalle de valeurs du code de découpage en canaux est de 0 à 127.

10. Procédé de configuration selon l'une quelconque des revendications 1 à 5, dans lequel l'intervalle de valeurs du code de découpage en canaux est de 0 à 255.

11. Procédé de configuration selon l'une quelconque des revendications 1 à 5, dans lequel le code de découpage en canaux est associé à l'un quelconque parmi : un canal d'émission, un flux de commande d'accès à un support, une file d'attente pour desserte prioritaire et un code de découpage en canaux ou un ensemble de codes de découpage en canaux disponible dans le régime commun du mode de connexion renforcée.

12. Procédé de configuration selon l'une quelconque des revendications 1 à 5, dans lequel l'intervalle de valeurs du code de brouillage est de 0 à 15.

13. Système de configuration pour configurer un HS-SCCH destiné à être utilisé par un Equipement Utilisateur, UE, dans un régime commun d'un mode de connexion renforcée, le système étant **caractérisé en ce qu'**il comporte :
une unité de communication (402) dans un contrôleur de réseau radio, RNC, pour communiquer à l'UE, à l'aide de signaux, un code de découpage en canaux et/ou un code de brouillage configuré(s) de HS-SCCH, utilisable(s) par l'UE dans le régime commun du mode de connexion renforcée ;
une unité d'acquisition (404), dans l'UE, pour acquérir le code de découpage en canaux et/ou le code de brouillage à partir des signaux ; et
une unité de traitement (406) dans l'UE pour utiliser le code de découpage en canaux et/ou le code de brouillage configuré(s) afin d'effectuer un désétalement et un désembrouillage sur le HS-SCCH lorsque l'UE contrôle les données envoyées dans le régime commun du mode de connexion renforcée.
